# EUROPÄISCHE PATENTANMELDUNG

(11) **EP 2 390 571 A2**
(43) Veröffentlichungstag der Anmeldung: **30.11.2011**
(21) Anmeldenummer: 11166059.3
(22) Anmeldetag: 13.05.2011
(51) Int. Cl.: F23N 1/00

(54) **Verfahren zur Steuerung eines Gasbrenners und Gas-Kochfeld mit mehreren Gasbrennern**

(30) Priorität: 31.05.2010 DE 102010023090
(71) Anmelder: E.G.O. ELEKTRO-GERÄTEBAU GmbH, 75038 Oberderdingen (DE)
(72) Erfinder: Gärtner, Norbert, 60437, Frankfurt (DE); Schaumann, Uwe, 75038, Oberderdingen (DE)
(74) Vertreter: Patentanwälte Ruff, Wilhelm, Beier, Dauster & Partner

(57) **Zusammenfassung**

Bei einem Verfahren zur Steuerung eines Gasbrenners (12) wird dieser von einem elektronisch steuerbaren Gasventil (15) mit Gas versorgt, wobei er in einem Klein-Leistungsbereich und in einem Groß-Leistungsbereich von dem Gasventil mit Gas versorgt wird. Zu einem Zeitpunkt ist nur jeweils einer der Leistungsbereiche verfügbar, wobei in jedem der Leistungsbereiche mit einem Bedienelement (19) eine Leistung am Gasbrenner (12) von einer Minimal-Leistung bis zu einer Maximal-Leistung vorgebbar ist. Dabei unterscheiden sich der Klein-Leistungsbereich und der Groß-Leistungsbereich um mehr als 50%.

## Beschreibung

### Anwendungsgebiet und Stand der Technik

Die Erfindung betrifft ein Verfahren zur Steuerung eines Gasbrenners sowie ein Gas-Kochfeld mit mehreren Gasbrennern, mit bzw. an dem das Verfahren durchgeführt wird.

Aus der DE 10 2010 005 655.3 vom 19. Januar 2010 ist es bekannt, in Abhängigkeit von einem Durchmesser eines auf einen Gasbrenner aufgestellten Kochtopfes einen Flammkreis des Gasbrenners einzustellen, was dann natürlich einer gewissen bestimmten Leistung entspricht. Damit kann ein Gasbrenner in einem energieoptimierten Bereich arbeiten.

### Aufgabe und Lösung

Der Erfindung liegt die Aufgabe zugrunde, ein eingangs genanntes Verfahren sowie ein entsprechendes Gas-Kochfeld zur Durchführung des Verfahrens zu schaffen, mit denen Probleme des Standes der Technik beseitigt werden können und insbesondere eine vielseitige und vorteilhafte Ansteuerung eines Gasbrenners möglich ist.

Gelöst wird diese Aufgabe durch ein Verfahren mit den Merkmalen des Anspruchs 1 sowie ein Gas-Kochfeld mit den Merkmalen des Anspruchs 13. Vorteilhafte sowie bevorzugte Ausgestaltungen der Erfindung sind Gegenstand der weiteren Ansprüche und werden im Folgenden näher erläutert. Manche der nachfolgend genannten Merkmale werden nur für das Verfahren oder nur für das Gas-Kochfeld beschrieben. Sie sollen jedoch unabhängig davon sowohl für das Verfahren als auch für das Gas-Kochfeld gelten können. Der Wortlaut der Ansprüche wird durch ausdrückliche Bezugnahme zum Inhalt der Beschreibung gemacht.

Es ist vorgesehen, dass der Gasbrenner von einem elektronisch steuerbaren Gasventil mit Gas versorgt wird, das insbesondere stufenlos steuerbar ist. Vorteilhaft weist das Gas-Kochfeld nur elektronisch steuerbare Gasventile zur Ansteuerung der Gasbrenner auf, wobei natürlich noch sicherheitstechnisch vorgeschriebene Absperrventile in konventioneller Bauweise vorgesehen sein können. Diese können aber nur ganz sperren oder ganz öffnen. Stufenlos soll im Zusammenhang dieser Anmeldung sowohl stufenlos als auch mit feiner Unterteilung in vielen kleinen Stufen bedeuten können.

Erfindungsgemäß gibt es für den Gasbrenner bzw. sein Gasventil einen Klein-Leistungsbereich und einen Groß-Leistungsbereich. In beiden Leistungsbereichen wird der Gasbrenner von dem Gasventil mit Gas versorgt bzw. angesteuert, und zwar vorteilhaft stufenlos, wozu eben das Gasventil entsprechend angesteuert wird. Zu einem Zeitpunkt ist jeweils nur einer der Leistungsbereiche verfügbar, was bedeutet, dass sich der Gasbrenner mit seinem Gasventil entweder in dem einen Leistungsbereich oder einem anderen Leistungsbereich befindet. Durch Betätigung eines speziellen Bedienelements kann zwischen den Leistungsbereichen umgeschaltet werden. Während sich der Gasbrenner mit seinem Gasventil in einem der Leistungsbereiche befindet, bewirkt eine Änderung der Leistungseinstellung auch nur eine Änderung nur in diesem Leistungsbereich. Mit einem Bedienelement kann in jedem der Leistungsbereiche eine Leistung an dem Gasbrenner eingestellt werden, die von einer Minimal-Leistung bis zu einer Maximal-Leistung reicht, wobei diese Leistung einer Einstellung oder Position des Bedienelements entspricht.

Liegt der Klein-Leistungsbereich vor, so wird durch eine Minimal-Leistungs-Einstellung des Bedienelements als Minimal-Leistung mindestens diejenige Leistung am Gasbrenner eingestellt, die als Kleinst-Betriebsleistung für den stabilen Betrieb des Gasbrenners notwendig ist. Darunter würde die Flamme nicht sicher bzw. stabil genug brennen oder sogar erlöschen. Dies ist konstruktiv vorgegeben bzw. kann beeinflusst werden, so dass dieser Wert als Grenzwert nach oben oder unten eingestellt werden kann. Durch eine Maximal-Leistungs-Einstellung des Bedienelements wird eine Maximal-Leistung am Gasbrenner und am Gasventil erreicht, welche wiederum deutlich unterhalb einer Größt-Betriebsleistung des Gasbrenners liegt. Diese Größt-Betriebsleistung des Gasbrenners ist konstruktiv vorgegeben und sollte oder kann nicht überschritten werden.

Beim Groß-Leistungsbereich ist vorgesehen, dass nach Einstellen einer Minimal-Leistungs-Einstellung des Bedienelements eine Minimal-Leistung am Gasbrenner eingestellt wird, die deutlich über der vorgenannten Kleinst-Betriebsleistung des Gasbrenners liegt. Durch eine Maximal-Leistungs-Einstellung des Bedienelements wird eine Maximal-Leistung am Gasbrenner und an seinem Gasventil eingestellt, die nahe oder gleich der vorgenannten Größt-Betriebsleistung des Gasbrenners liegt. Mit viel mehr Leistung könnte der Gasbrenner konstruktiv nicht dauerhaft betrieben werden, was beispielsweise an einem maximalen Durchflussquerschnitt am Gasbrenner liegt.

Für den Klein-Leistungsbereich und den Groß-Leistungsbereich gilt weiterhin noch, dass jeweils eine Mittel-Leistungs-Einstellung des Bedienelements als Mittel-Leistung des jeweiligen Leistungsbereichs deutlich unterschiedlich ist bzw. die Mittel-Leistung des Klein-Leistungsbereichs deutlich unter derjenigen des Groß-Leistungsbereichs liegt.

Mit der Erfindung kann also erreicht werden, dass ein Gasbrenner samt seinem Gasventil in mindestens zwei Leistungsbereichen eingestellt werden kann und dann in diesem jeweils von der kleinsten bis zur größten Leistungsstufe veränderbar ist. Dabei entspricht der Gasbrenner sozusagen in dem Klein-Leistungsbereich einem eher kleinen Gasbrenner und in dem Groß-Leistungsbereich einem eher großen Gasbrenner. Vorteilhaft können sich die Leistungsbereiche um mindestens 30% bis 50% unterscheiden. Dies kann so sein, dass sie sich in ihrer Minimal-Leistung um mindestens 50% unterscheiden und in ihrer Maximal-Leistung um mindestens 30%, vorzugsweise auch um mindestens 50%. Das Wechseln zwischen den beiden Leistungsbereichen erfolgt nur durch jeweils andere Ansteuerung bzw. Einstellung des Gasventils über das Bedienelement bzw. über eine zu dem Bedienelement gehörende Steuerung des Gasbrenners bzw. des gesamten Gas-Kochfeldes.

Mit der Erfindung ist es möglich, dass ein einzelner Gasbrenner den Leistungsbereich von mindestens zwei unterschiedlich leistungsstarken Gasbrennern abdeckt. So kann beispielsweise bei einem Kochfeld mit vier Gasbrennern der Leistungsbereich von typischen Gas-Kochfeldern mit fünf Kochstellen bzw. fünf Gasbrennern abgebildet werden. Denn der Vorteil von Gas-Kochfeldern mit fünf Gasbrennern liegt vor allem darin, dass für jede Topfgröße ein möglichst gut angepasster Gasbrenner zur Verfügung steht. Nur in sehr seltenen Fällen werden alle fünf Kochstellen bzw. Gasbrenner gleichzeitig zum Kochen verwendet. So kann bei einem Gas-Kochfeld mit beispielsweise vier Gasbrennern zwar nicht die Gesamtanzahl der Gasbrenner erhöht werden, da diese natürlich weiterhin vier beträgt. Eine Bedienperson hat dann jedoch die Varianz bezüglich der Leistung von mindestens fünf Gasbrennern, sie kann also angepasst an eine gewünschte Topfgröße einen solchen verstellbaren Gasbrenner bei einem kleinen Topf eher mit einer Charakteristik wie einen kleinen Gasbrenner verwenden und bei einem großen Topf mit einer Charakteristik wie ein großer Gasbrenner. Selbstverständlich kann ein Gasbrenner nicht mit beliebiger Leistung betrieben werden, weil dies konstruktiv durch die Gasaustrittsöffnungen und dergleichen vorgegeben ist. Es lässt sich aber die vorgenannte Varianz in der Leistung von etwa 50% gut erreichen, was ja in etwa dem Unterschied zwischen einem kleinen Gasbrenner und einem mittelgroßen Gasbrenner entspricht.

Bei der vorgenannten mittleren Leistung der beiden Leistungsbereiche, welche einer Mittel-Leistungs-Einstellung am Bedienelement entspricht, kann ein Leistungsunterschied von ebenfalls mindestens 30% vorliegen. Vorteilhaft beträgt der Leistungsunterschied auch hier etwa oder mindestens 50%.

Vorteilhaft können die Leistungsbereiche, also der Klein- und der Groß-Leistungsbereich, sowie die Leistungsstufe nur über das eine Gasventil eingestellt werden und nicht über eine Bypass-Leitung an einer Drossel vorbei odgl.. So ist ein einfacher Aufbau möglich mit gleichzeitiger guter Kontrolle.

In weiterer Ausgestaltung der Erfindung sollten die Leistungsbereiche zwischen der Minimal-Leistung und der Maximal-Leistung einigermaßen kontinuierlich oder linear verändert werden können bzw. so, wie es bei üblichen Gasbrennern samt Gasventilen möglich ist, insbesondere wenn es elektronisch gesteuerte Gasventile sind.

Ein Klein-Leistungsbereich kann von etwa 200 Watt bis etwa 2.000 Watt reichen. Diese 200 Watt sind dann vorteilhaft in etwa die Kleinst-Betriebsleistung des Gasbrenners für seinen Dauerbetrieb, die also konstruktiv so vorgegeben bzw. beeinflussbar ist, aber durch eine andere Konstruktion auch anders sein könnte. Mit weniger Leistung kann er nicht im Dauerbetrieb betrieben werden, da sonst die Flamme nicht stabil ist. Sollte eine geringere Leistung gewünscht werden, so müsste der Gasbrenner getaktet betrieben werden.

Die Leistungsbreite kann beim Groß-Leistungsbereich vorteilhaft von etwa 500 Watt bis etwa 3.500 Watt reichen. Hier können dann 3.500 Watt in etwa die Größt-Betriebsleistung des Gasbrenners für seinen Dauerbetrieb sein. Mehr Gas kann beispielsweise konstruktionsbedingt oder durch eine eingebaute Drossel im Gasbrenner gar nicht aus ihm herausströmen, selbst wenn das zugehörige Gasventil ganz geöffnet ist. Der Wert kann durch eine andere Konstruktion auch anders bzw. höher sein.

In weiterer Ausgestaltung der Erfindung ist es möglich, dass die Größe eines auf dem Gasbrenner stehenden Topfes automatisch erkannt wird. Diese erkannte Größe wird dann mit einer vorgegebenen Grenz-Topfgröße verglichen, die für diesen Gasbrenner definiert ist. Derartige Topfgrößenerkennungs-Systeme sind auch für Gasbrenner bekannt. Dann wird automatisch zwischen den beiden Leistungsbereichen umgeschaltet derart, dass bei einem eher kleineren Topf unterhalb der Grenz-Topfgröße der Klein-Leistungsbereich gewählt wird für den Betrieb des Gasbrenners. Bei einem größeren Topf oberhalb der Grenz-Topfgröße wird der Groß-Leistungsbereich gewählt. So muss also nicht eine Bedienperson selbst die Anpassung des Leistungsbereichs dieses Gasbrenners an die Topfgröße vornehmen, sondern das System macht dies automatisch. So wird vermieden, dass es eine Bedienperson vergisst. Des weiteren kann eine automatische Erkennung optimaler arbeiten und so möglicherweise auch Energie sparen. Selbstverständlich kann an einer Steuerung vorgesehen sein, dass eine Bedienperson einen solchen Automatik-Modus auch abschalten kann.

In weiterer Ausgestaltung der Erfindung kann ein gemeinsamer Betrieb von zwei nebeneinander liegenden Gasbrennern mit dem erfindungsgemäßen Verfahren erfolgen. Dabei kann vorgesehen sein, dass bei den Gasbrennern, die auch konstruktiv eine etwas unterschiedliche Größe für eigentlich etwas unterschiedliche Leistungsbereiche aufweisen können, durch Änderung seines Leistungsbereichs mindestens einer der beiden Gasbrenner an den vorgegebenen oder eingestellten Leistungsbereich des anderen Gasbrenners angepasst wird. Dies erfolgt derart, dass dann die beiden Gasbrenner gleiche Leistungsbereiche aufweisen in dem Sinn, dass innerhalb der Leistungsbereiche die Minimal-Leistung und die Maximal-Leistung jeweils gleich sind. Somit können sozusagen zwei nebeneinander liegende Gasbrenner bezüglich ihrer Leistungserzeugung synchronisiert oder gleichgeschaltet werden. Dazu werden die Gasventile, die die beiden Gasbrenner ansteuern, eben bezüglich des Leistungsbereichs so eingestellt. Dann steuert eine Steuerung die beiden Gasventile gleichartig bzw. mit der gleichen Leistungsstufe an, was ja kein Problem ist, da bei gleichen Leistungsbereichen gleiche Leistungsstufen auch die gleiche Leistung am jeweiligen Gasbrenner erzeugen. Dann ist es möglich, dass beispielsweise ein großer Bräter odgl. gleichmäßig erhitzt werden kann mit zwei Gasbrennern, auf denen er aufgestellt ist.

Des weiteren kann dann die Bedienung für eine Bedienperson sehr stark vereinfacht werden, wenn sie beispielsweise nur an einem Bedienelement eines der beiden Gasbrenner eine gewünschte Leistung einstellt und durch die Anpassung der Leistungsbereiche dann beide Gasbrenner mit derselben Leistung betrieben werden. Das andere Bedienelement des anderen Gasbrenners wird dann entweder deaktiviert oder von der Steuerung automatisch mit verstellt, beispielsweise um einer Bedienperson anzuzeigen, dass beide Gasbrenner arbeiten. Dies geht besonders gut bei Bedienelementen in Form von Berührungsschaltern mit Anzeigeelementen in Form von Sieben-Segment-Anzeigen odgl..

In nochmals weiterer Ausgestaltung der Erfindung kann eine Anpassung der Leistungsbereiche des Gasbrenners dazu verwendet werden, unterschiedliche Gasarten bzw. Gasqualitäten des zugeführten Gases auszugleichen. Diese haben nämlich unterschiedliche Brennwerte bzw. innerhalb Deutschlands kann der Brennwert des zugeführten Gases um bis zu 15% schwanken. Damit sich dies nicht an der Leistungsstufe eines Gasbrenners zeigt, diese also nicht auf einmal 15% geringer oder höher wird, kann mittels eines Gassensors die Gasart bzw. die Gasqualität des zugeführten Gases erkannt werden. Dies wird an eine Steuerung des Gas-Kochfeldes gegeben und diese passt dann den Leistungsbereich des Gasbrenners bzw. seines Gasventils entsprechend an. Das bedeutet also, dass bei schlechter Gasqualität ein Leistungsbereich näher dem Groß-Leistungsbereich eingestellt wird. Bei guter Gasqualität wird ein Leistungsbereich näher dem Klein-Leistungsbereich eingestellt. So kann erreicht werden, dass beispielsweise nach einem Umzug und einer Versorgung mit schlechterem Gas an einem Gasbrenner die Leistungsstufe 5 oder auch die Maximal-Leistungsstufe dasselbe Resultat erzielt, wie zuvor an einem Anschluss an einer guten Gasqualität.

Bei einem erfindungsgemäßen Gas-Kochfeld weist vorteilhaft mindestens ein Gasbrenner ein elektronisches Gasventil auf. Es ist eine Steuerung vorgesehen, die das Gasventil entsprechend dem genannten Verfahren ansteuern kann. Vorteilhaft weisen alle Gasbrenner ein solches elektronisches Gasventil auf. Besonders vorteilhaft ist das elektronische Gasventil stufenlos steuerbar und das einzige Gasventil für den Gasbrenner, insbesondere das einzige stufenlos steuerbare Gasventil. Die Gasbrenner können sich dabei auch konstruktiv unterscheiden hinsichtlich ihrer Leistungsbereiche, so dass mindestens ein Gasbrenner eher kleiner ausgebildet ist für einen kleineren Leistungsbereich und mindestens ein Gasbrenner größer ausgebildet ist für einen größeren Leistungsbereich. Mittels der vorgenannten Angleichung können gerade diese beiden Gasbrenner aneinander angepasst werden für einen gemeinsamen Betrieb oder es können durch Anpassung des Leistungsbereichs sozusagen mehr Gasbrenner angeboten werden als tatsächlich vorhanden sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Funktionsdarstellung eines Gas-Kochfeldes mit drei üblichen Gasbrennern und einem Gasbrenner gemäß der Erfindung und
- Fig. 2: ein Diagramm der erzeugten Leistung P am Gasbrenner über der eingestellten Leistungsstufe L mit einem Klein-Leistungsbereich und einem Groß-Leistungsbereich.

### Detaillierte Beschreibung der Ausführungsbeispiele

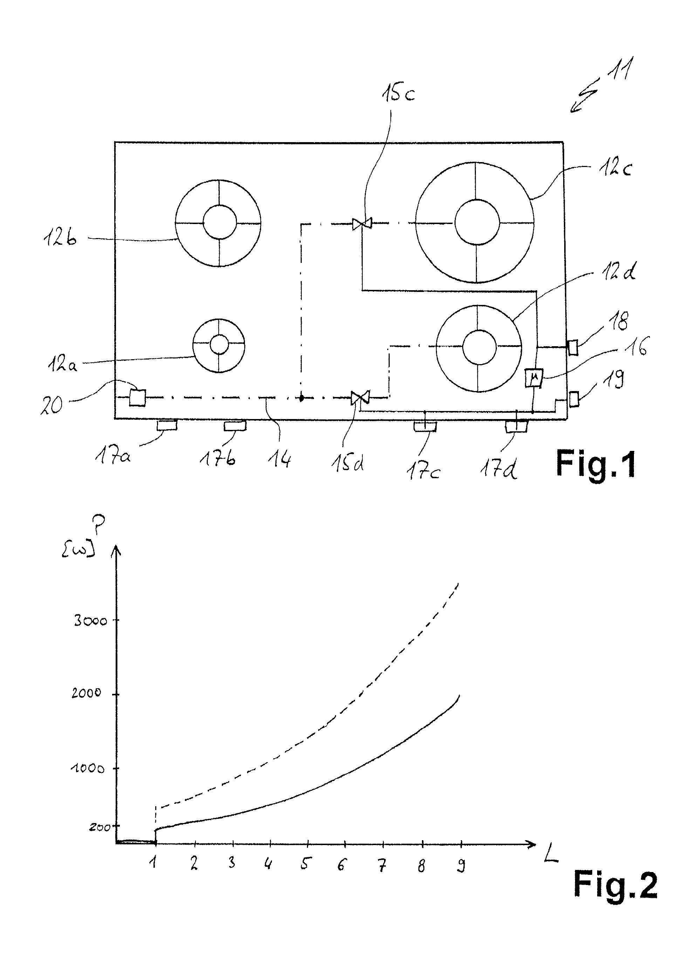

In Fig. 1 ist ein Gas-Kochfeld 11 gemäß der Erfindung in Draufsicht schematisch dargestellt. Das Gas-Kochfeld 11 weist vier Gasbrenner 12a bis 12d auf, wie es an sich bekannt ist. Dabei ist der Gasbrenner 12a vorne links ein relativ kleiner Gasbrenner, beispielsweise für einen Leistungsbereich von 150 Watt bis 1.200 Watt. Der Gasbrenner 12b hinten links ist ein mittlerer Gasbrenner und ist für einen Leistungsbereich von 200 Watt bis 2.000 Watt ausgebildet bzw. so konstruiert. Der Gasbrenner 12c hinten rechts ist ein relativ großer Gasbrenner und für einen Leistungsbereich von beispielsweise 500 Watt bis 3.500 Watt ausgebildet. Der Gasbrenner 12d vorne rechts ist ein weiterer mittlerer Gasbrenner, der jedoch erfindungsgemäß ausgebildet ist bzw. erfindungsgemäß arbeiten kann. Er kann nämlich einmal in einem Klein-Leistungsbereich arbeiten, der wie beim Gasbrenner 12b von 200 Watt bis 2.000 Watt reicht, wobei 200 Watt die kleinste abgegebene Dauerleistung bzw. die Kleinst-Betriebsleistung ist und 2.000 Watt die größte in der maximalen Stellung eines Bedienelements bzw. als Maximal-Leistung. Rein vom Konstruktionsprinzip bzw. von der Größe, insbesondere einem Durchmesser, entspricht der Gasbrenner 12d dem Gasbrenner 12b. Deswegen stimmt sein Klein-Leistungsbereich auch mit dem Leistungsbereich des in diesem Beispiel nicht variablen Gasbrenners 12b überein.

Des Weiteren ist, wie nachfolgend noch näher ausgeführt wird, der Gasbrenner 12d in einem Groß-Leistungsbereich betreibbar. Hier betragen die vorgenannte Minimal-Leistung 500 Watt und die Maximal-Leistung 3.500 Watt, was seiner Größt-Betriebsleistung entspricht. Er entspricht hier also dem konstruktiv deutlich größeren Gasbrenner 12c hinten rechts.

Eine Gasversorgung der Gasbrenner 12a bis 12d erfolgt über eine Haupt-Gasleitung 14 in das Gas-Kochfeld 11 hinein. Davon zweigen beispielhaft ein Gasventil 15c für den Gasbrenner 12c hinten rechts und ein Gasventil 15d für den Gasbrenner 12d vorne rechts ab. Das Gasventil 15c ist mittels eines Bedienelements 17c einstellbar und das Gasventil 15d mittels eines Bedienelements 17d. Entsprechendes gilt für die Bedienelemente 17a und 17b für die Gasbrenner 12a und 12b. Die Bedienelemente 17 sind wie die Gasventile 15a bis 15d über nicht dargestellte Verbindungen mit einer Steuerung 16 des Gas-Kochfelds 11 verbunden. Des Weiteren ist ein Zusatz-Bedienelement 19 vorgesehen für den Gasbrenner 12d bzw. dessen Bedienelement 17d. Mittels dieses Zusatz-Bedienelements 19 kann der Gasbrenner 12d zwischen dem Klein-Leistungsbereich und dem Groß-Leistungsbereich umgeschaltet werden. Es kann im Prinzip beliebig ausgebildet sein, beispielsweise als Druckknopf, als Drehknopf oder als Berührungsschalter.

Im Klein-Leistungsbereich steuert das Gasventil 15d gemäß Steuerbefehlen, die es vom Bedienelement 17d über die Steuerung 16 erhält, den Gasbrenner 12d an bzw. versorgt ihn mit einer gewissen Gasmenge. Sind die Bedienelemente 17a bis 17d einfache Drehknebel, wie dies für Gas-Kochfelder häufig üblich ist, so ist der Drehbereich von üblicherweise etwa knapp 300° in neun Leistungsstufen unterteilt, wie sie in dem Diagramm in Fig. 2 auf der Achse nach rechts aufgetragen sind. Entweder kann jeder ganzzahligen Leistungsstufe dabei eine genau festgelegte Leistung entsprechen, die durch eine bestimmte Gasmenge, welche das Gasventil 15d zum Gasbrenner 12d durchlässt, bestimmt wird. Für feinere Abstufungen können noch jeweils zwischen den ganzzahligen Leistungsstufen liegende Stufen vorgesehen sein, die dann auch eine etwa dazwischen liegende Leistung ergeben am Gasbrenner 15d.

Alternativ kann ein kontinuierlicher Leistungsverlauf realisiert sein, wie er in Fig. 2 dargestellt ist, oder es kann eine derart feine Abstufung sein, dass sich ein quasi kontinuierlich und stetig steigender Leistungsverlauf ergibt. Somit werden am Bedienelement 17d entsprechend seiner Stellung Signale bzw. Bedienbefehle erzeugt, welche von der Steuerung 16 dann entweder einem durchgezogen dargestellten Klein-Leistungsbereich oder einem gestrichelt dargestellten Groß-Leistungsbereich zugeordnet werden, abhängig vom Zustand des Zusatz-Bedienelementes 19. In Abhängigkeit davon wiederum steuert die Steuerung 16 das Gasventil 15d an, und zwar so, dass sich die aus der Fig. 2 ergebenden Leistungsverläufe im Klein-Leistungsbereich oder im Groß-Leistungsbereich ergeben. So ist zu erkennen, dass bei der Stufe 1, also der niedrigsten Leistung für den Dauerbetrieb des Gasbrenners 12d, die Leistung im Klein-Leistungsbereich 200 Watt beträgt, also die Kleinst-Betriebsleistung, und im Groß-Leistungsbereich 500 Watt. Bei der Stufe 5 als Mittel-Leistungs-Einstellung liegt die Leistung im Klein-Leistungsbereich bei etwa 700 Watt und im Groß-Leistungsbereich bei etwa 1.500 Watt. Bei der höchsten Stufe, der Stufe 9, beträgt die Leistung im Klein-Leistungsbereich die vorgenannten 2.000 Watt und im Groß-Leistungsbereich 3.500 Watt, also seine Größt-Betriebsleistung.

Somit ist es also möglich, durch Betätigen des Zusatz-Bedienelementes 19 entweder frei zwischen dem Klein-Leistungsbereich und dem Groß-Leistungsbereich des Gasbrenner 12d hin und her zu wechseln. Alternativ kann vorgesehen sein, dass der Klein-Leistungsbereich, für den der Gasbrenner 12d konstruktiv bzw. von seiner Größe her eigentlich ausgelegt ist, standardmäßig eingestellt ist. Bei normaler Betätigung des Bedienelements 17d wird also der Klein-Leistungsbereich durchfahren bzw. das Gasventil 15d den Gasbrenner 12d mit einer entsprechenden Menge an Gas versogt. Nur durch zusätzlich mögliches Betätigen des Zusatz-Bedienelementes 19 kann der Gasbrenner 12d in den Groß-Leistungsbereich gewechselt werden und dann durch entsprechende Einstellungen am Bedienelement 17d angesteuert werden. Dabei kann vorgesehen sein, dass der Gasbrenner 12d beim Ausschalten über das Gasventil 15d und die Steuerung 16 wieder zurück in den Klein-Leistungsbereich wechselt bzw. das nächste Einschalten wiederum im Klein-Leistungsbereich erfolgt.

Somit ist zu erkennen, dass durch den Wechsel des Betriebs des Gasbrenners 12d einerseits im Klein-Leistungsbereich und andererseits im Groß-Leistungsbereich sozusagen fünf Gas-Kochstellen am Gas-Kochfeld 11 zur Verfügung stehen, nämlich am Gasbrenner 12a mit kleiner Leistung, an den Gasbrennern 12b und 12d mit mittlerer Leistung und an den Gasbrennern 12c und 12d mit großer Leistung. Es gibt also fünf verschiedene verfügbare Leistungsbereiche, wenngleich natürlich nur vier Gasbrenner 12a bis 12d vorhanden sind.

Eine weitere Möglichkeit gemäß der Erfindung besteht darin, dass der Gasbrenner 12d mittels des Zusatz-Bedienelements 18 gemeinsam mit dem Gasbrenner 12c betrieben werden kann. Dazu kann nach Betätigen des Zusatz-Bedienelements 18, eventuell auch nach Betätigen des weiteren Zusatz-Bedienelements 19, zum einen der Gasbrenner 12d mittels seines Gasventils 15d im Groß-Leistungsbereich angesteuert werden, der demjenigen des Gasbrenners 12c entspricht. Des Weiteren steuert dann die Steuerung 16 die beiden Gasventile 15c und 15d gleichermaßen an, also jeweils mit der gleichen Leistungsstufe, so dass die beiden Gasbrenner 12c und 12d die gleiche Leistung erzeugen. Dies kann dazu dienen, einen länglichen großen Bräter auf die beiden Gasbrenner 12c bzw. 12d bzw. deren Gas-Kochstellen aufzustellen. Die gewünschte Leistungsstufe kann dann durch die Kopplung an der Steuerung 16 an einem der Bedienelemente 17c oder 17d eingestellt werden bzw. es kann vorgesehen sein, dass für einen solchen gekoppelten Betrieb eines der Bedienelemente 17c bzw. 17d alleine maßgeblich ist. Beispielsweise kann dies das Bedienelement 17c des größeren Gasbrenners 12c sein. Dann können für das Bedienelement 17d eingegebene Befehle ganz vernachlässigt werden bzw. nichts bewirken.

Ein Betätigen des Bedienelementes 17c steuert dann über die Steuerung 16 die Gasventile 15c und 15d an mit jeweils der gleichen Leistungsstufe, so dass ein aufgesetzter Bräter von beiden Gasbrennern 12c und 12d gleichmäßig beheizt wird. Entweder durch Zurückstellen der Leistung auf Null am Bedienelement 17c oder durch erneutes Betätigen des Zusatz-Bedienelements 18 kann der gekoppelte Betrieb wieder gestoppt werden. Dies weist den Vorteil auf, dass bei einem erneuten Einschalten nur eines Gasbrenners 12c oder 12d über das entsprechende Bedienelement 17c oder 17d nicht plötzlich beide betrieben werden und somit einer ungewollt.

In nochmaliger weiterer Ausgestaltung der Erfindung kann mittels eines an der Haupt-Gasleitung 14 vorgesehenen Gas-Sensors 20 die zugeführte Gasart bzw. zumindest deren Brennwert erkannt werden. Daraus kann dann, wie eingangs erläutert worden ist, für die verschiedenen Gasbrenner 12a bis 12d über deren Gasventile 15a bis 15d eine Anpassung erfolgen derart, dass beispielsweise der Gasbrenner 12d unabhängig vom Brennwert des zugeführten Gases bei der maximalen Leistungsstufe 9 im Klein-Leistungsbereich stets 2.000 Watt Brennleistung liefert. Für Gas mit schlechter Qualität muss dazu das Gasventil etwas mehr als sonst geöffnet werden, für Gas mit besonders guter Qualität etwas weniger. Dies ist aber für die Steuerung 16 kein Problem.

In nochmals weiterer, leicht vorstellbarer Ausgestaltung der Erfindung kann ein weiterer Sensor vorgesehen sein, beispielsweise gemäß der DE 10 2009 024 236 A. Dieser Sensor kann auf eingangs erläuterte Art und Weise die Größe eines aufgesetzten Topfes erkennen und den Leistungsbereich am Gasbrenner entsprechend anpassen durch Einstellen eines Klein-Leistungsbereichs oder Groß-Leistungsbereichs oder auch eines dazwischen liegenden Mittel-Leistungsbereichs.

## Patentansprüche

1. Verfahren zur Steuerung eines Gasbrenners, insbesondere eines Gasbrenners in einem Kochfeld mit mehreren Gasbrennern, wobei der Gasbrenner von einem elektronisch stufenlos steuerbaren Gasventil mit Gas versorgt wird, **dadurch gekennzeichnet, dass** der Gasbrenner mindestens in einem Klein-Leistungsbereich und in einem Groß-Leistungsbereich von dem Gasventil mit Gas versorgt bzw. angesteuert wird, wobei zu einem Zeitpunkt nur jeweils einer der Leistungsbereiche verfügbar ist, wobei in jedem der Leistungsbereiche mit einem Bedienelement eine Leistung am Gasbrenner von einer Minimal-Leistung bis zu einer Maximal-Leistung vorgebbar ist entsprechend einer Einstellung des Bedienelements derart, dass
- bei dem Klein-Leistungsbereich durch eine Minimal-Leistungs-Einstellung des Bedienelements als Minimal-Leistung mindestens die Kleinst-Betriebsleistung des Gasbrenners eingestellt wird und durch eine Maximal-Leistungs-Einstellung des Bedienelements eine Maximal-Leistung, die deutlich unterhalb der Größt-Betriebsleistung des Gasbrenners liegt,
- bei dem Groß-Leistungsbereich durch eine Minimal-Leistungs-Einstellung des Bedienelements als Minimal-Leistung eine Leistung deutlich über der Kleinst-Betriebsleistung des Gasbrenners eingestellt wird und durch eine Maximal-Leistungs-Einstellung des Bedienelements eine Maximal-Leistung, die nahe der Größt-Betriebsleistung des Gasbrenners liegt,
wobei eine Mittel-Leistungs-Einstellung des Klein-Leistungsbereichs deutlich unter der Mittel-Leistungs-Einstellung des Groß-Leistungsbereichs liegt.

2. Verfahren nach Anspruch 1, **dadurch gekennzeichnet, dass** sich die Leistungsbereiche in ihrer Minimal-Leistung um mindestens 50% unterscheiden und in ihrer Maximal-Leistung um mindestens 30%, vorzugsweise um mindestens 50%.

3. Verfahren nach Anspruch 1 oder 2, **dadurch gekennzeichnet, dass** bei jeweils der mittleren Leistung der beiden Leistungsbereiche entsprechend der Mittel-Leistungs-Einstellung am Bedienelement ein Leistungsunterschied von mindestens 30% vorliegt, vorzugsweise von mindestens 50%.

4. Verfahren nach einem der vorhergehenden Ansprüche, **dadurch gekennzeichnet, dass** die Leistungsbereiche, also der Klein- und der Groß-Leistungsbereich, sowie die Leistungsstufe ausschließlich über das eine Gasventil pro Gasbrenner einstellbar sind bzw. eingestellt werden und vorzugsweise nicht über eine Bypass-Leitung an einer Drossel vorbei odgl..

5. Verfahren nach einem der vorhergehenden Ansprüche, **dadurch gekennzeichnet, dass** zu einem Zeitpunkt jeweils nur einer der Leistungsbereiche verfügbar ist, wobei sich der Gasbrenner mit seinem Gasventil entweder in dem einen Leistungsbereich oder in dem anderen Leistungsbereich befindet.

6. Verfahren nach einem der vorhergehenden Ansprüche, **dadurch gekennzeichnet, dass** durch ein weiteres Bedienelement einer Bedieneinrichtung für den Gasbrenner bzw. das Gas-Kochfeld zwischen den beiden Leistungsbereichen umgeschaltet wird.

7. Verfahren nach einem der vorhergehenden Ansprüche, **dadurch gekennzeichnet, dass** der Klein-Leistungsbereich von 200 Watt bis 2000 Watt reicht, wobei vorzugsweise 200 Watt in etwa die Kleinst-Betriebsleistung des Gasbrenners ist für seinen Dauerbetrieb.

8. Verfahren nach einem der vorhergehenden Ansprüche, **dadurch gekennzeichnet, dass** der Groß-Leistungsbereich von 500 Watt bis 3500 Watt reicht, wobei vorzugsweise 3500 Watt die Größt-Betriebsleistung des Gasbrenners ist für seinen Dauerbetrieb.

9. Verfahren nach einem der vorhergehenden Ansprüche, **dadurch gekennzeichnet, dass** die Größe eines auf dem Gasbrenner stehenden Topfes automatisch erkannt wird und mit einer vorgegebenen Grenz-Topfgröße verglichen wird, und automatisch zwischen den Leistungsbereichen umgeschaltet wird derart, dass bei einem kleineren Topf unterhalb der Grenz-Topfgröße der Klein-Leistungsbereich gewählt wird und bei einem größeren Topf oberhalb der Grenz-Topfgröße der Groß-Leistungsbereich.

10. Verfahren nach einem der vorhergehenden Ansprüche, **dadurch gekennzeichnet, dass** bei zwei nebeneinander liegenden Gasbrennern eines Gas-Kochfeldes mindestens einer der beiden Gasbrenner durch Änderung seines Leistungsbereichs an den vorgegebenen Leistungsbereich des anderen Gasbrenners angepasst wird derart, dass dann die beiden Gasbrenner gleiche Leistungsbereiche aufweisen, wobei die Gasventile, die jeweils die Gasbrenner versorgen, von einer Steuerung gleichartig bzw. mit der gleichen Leistungsstufe angesteuert werden, so dass die Gasbrenner, insbesondere bei jeweils gleicher eingestellter Leistungsstufe, gleiche Leistungen erzeugen.

11. Verfahren nach Anspruch 10, **dadurch gekennzeichnet, dass** die beiden Gasbrenner bzw. ihre Gasventile beim gemeinsamen Betrieb durch ein einziges Bedienelement angesteuert werden, wobei vorzugsweise dieses Bedienelement das Bedienelement eines der beiden Gasbrenner ist.

12. Verfahren nach einem der vorhergehenden Ansprüche, **dadurch gekennzeichnet, dass** mittels eines Gassensors die Gasart bzw. die Gasqualität des zugeführten Gases erkannt wird und eine Anpassung des Leistungsbereichs der Gasbrenner bzw. Gasventile daran erfolgt derart, dass bei schlechter Gasqualität ein Leistungsbereich näher dem Groß-Leistungsbereich eingestellt wird und vorzugsweise bei guter Gasqualität ein Leistungsbereich näher dem Klein-Leistungsbereich eingestellt wird.

13. Gas-Kochfeld mit mindestens einem Gasbrenner zur Durchführung des Verfahrens nach einem der vorhergehenden Ansprüche, **dadurch gekennzeichnet, dass** der mindestens eine Gasbrenner ein elektronisches Gasventil aufweist, vorzugsweise alle Gasbrenner, und der mindestens eine Gasbrenner samt dem zugehörigen Gasventil in seinem Leistungsbereich gemäß dem Verfahren nach einem der vorhergehenden Ansprüche veränderbar ist.

14. Gas-Kochfeld nach Anspruch 13, **dadurch gekennzeichnet, dass** das elektronische Gasventil stufenlos steuerbar ist und dass es das einzige Gasventil für den Gasbrenner ist, insbesondere das einzige stufenlos steuerbare Gasventil.
